# EUROPEAN PATENT APPLICATION

(11) **EP 4 848 215 A1**
(43) Date of publication of application: **02.12.2026**
(21) Application number: 26182157.3
(22) Date of filing: 30.05.2026
(51) Int. Cl.: G06T 11/60

(54) **TRAINING SKETCH-GUIDED IMAGE EDITING NEURAL NETWORKS USING AUTOMATICALLY GENERATED TRAINING DATASETS**

(30) Priority: 30.05.2025 US 202519223833
(71) Applicant: GDM Holding LLC, Mountain View CA 94043 (US)
(72) Inventor: QI, Hang, Mountain View, 94043 (US); RANE, Poorva Ganesh, Mountain View, 94043 (US); WOLFF, Christopher Frederic, Mountain View, 94043 (US)
(74) Representative: Trichard, Louis

(57) **Abstract**

Methods, systems, and apparatus, including computer programs encoded on computer storage media, for automatically generating a training dataset and then training a sketch-guided image editing neural network using the automatically generated training dataset to perform a sketch-guided image editing task.

## Description

### BACKGROUND

This specification relates to training neural networks.

Neural networks are machine learning models that employ one or more layers of nonlinear units to predict an output for a received input. Some neural networks include one or more hidden layers in addition to an output layer. The output of each hidden layer is used as input to the next layer in the network, i.e., the next hidden layer or the output layer. Each layer of the network generates an output from a received input in accordance with current values of a respective set of parameters.

### SUMMARY

This specification describes a training system implemented as computer programs on one or more computers in one or more locations that generates a training dataset automatically and with minimal human involvement and then trains a sketch-guided image editing neural network using the automatically generated training dataset to perform a sketch-guided image editing task, i.e., to apply an edit to an input image that is specified by a sketch image and, optionally, a text prompt.

In general, one innovative aspect of the subject matter described in this specification can be embodied in a method comprising: performing, on each of a plurality of initial images, image segmentation to generate a segmentation map for the initial image that identifies an area in the initial image that includes a depiction of an object; generating, for each of the plurality of initial images and based on the segmentation map for the initial image, a modified image that excludes the depiction of the object; generating a training dataset that comprises a plurality of training tuples, wherein each training tuple comprises an initial image and a modified image; and training a sketch-guided image editing neural network using the training dataset, wherein the training comprises: obtaining a batch of one or more training tuples from the training dataset; obtaining, for each training tuple in the batch, a sketch of an object depicted in the initial image included in the training tuple; generating, for each training tuple in the batch, a training output image based on processing the sketch and the modified image using the sketch-guided image editing neural network; and updating parameters of the sketch-guided image editing neural network based on optimizing an objective function that measures, for each training tuple in the batch, a difference between the training output image and the initial image included in the training tuple.

Performing the image segmentation may comprise, for each of the plurality of initial images: processing the initial image using an image segmentation neural network to generate the segmentation map.

Generating the modified image that excludes the depiction of the object may comprise, for each of the plurality of initial images: processing the initial image and the segmentation map for the initial image using an object removal neural network to generate the modified image.

Generating the sketch of the object may comprise, for each training tuple in the batch: processing the initial image included in the training tuple using an edge detector to generate an edge map for the initial image; and generating the sketch of the object based on the edge map for the initial image and the segmentation map included in the training tuple.

The edge detector may implement a Canny edge detection algorithm.

The edge detector may implement a holistically-nested edge detection algorithm.

The training input tuple may further comprise a text prompt that describes the object.

The sketch-guided image editing neural network may be a diffusion neural network that is configured to generate an output image conditioned on a conditioning input that comprises an input image and a sketch by performing a reverse diffusion process that includes a plurality of updating iterations.

The diffusion neural network may comprise one or more layers that are conditioned on the conditioning input at each of one or more of the plurality of updating iterations included in the reverse diffusion process.

Another innovative aspect of the subject matter described in this specification can be embodied in a method performed by one or more computers for sketch-guided image editing, the method comprising: receiving an input image and a sketch image specifying a target object; and processing, using a sketch-guided image editing neural network, the input image and the sketch image to generate an output image, wherein the output image is an edited version of the input image that includes a depiction of the target object corresponding to the sketch image, wherein the sketch-guided image editing neural network has been configured through training on an automatically generated dataset derived from a plurality of initial images to map from a conditioning input that comprises (i) a modified image, the modified image being a modified version of an initial image from which an object has been removed, and (ii) a sketch of the removed object, to a training output image that corresponds to the initial image with the object present.

The method may further comprise receiving a text prompt, and wherein the processing further uses the text prompt to generate the output image.

The sketches in the automatically generated dataset used for training the neural network may be derived by: processing the initial images using an edge detector to generate edge maps; and generating the sketches based on the edge maps and corresponding segmentation maps identifying the removed objects.

The sketch-guided image editing neural network may be a diffusion neural network configured to the perform the processing by executing a reverse diffusion process conditioned on the input image and the sketch image.

Other embodiments of this aspect include corresponding computer systems, apparatus, and computer programs recorded on one or more computer storage devices, each configured to perform the actions of the methods. A system of one or more computers can be configured to perform particular operations or actions by virtue of software, firmware, hardware, or any combination thereof installed on the system that in operation may cause the system to perform the actions. One or more computer programs can be configured to perform particular operations or actions by virtue of including instructions that, when executed by data processing apparatus, cause the apparatus to perform the actions.

The subject matter described in this specification can be implemented in particular embodiments so as to realize one or more of the following advantages. A high-quality training dataset for a sketch-guided image editing neural network can be generated automatically and with minimal human involvement by making use of the described techniques. As a result, the sketch-guided image editing neural network can be trained on a larger amount of higher-quality training data relative to conventional techniques and can therefore more accurately perform the sketch-guided image editing task after training.

By applying image segmentation, object removal, and edge detection on initial images to generate modified images and conditioning inputs which are then used as training data, and by using the initial images as target outputs, a training system implementing the described techniques can train the sketch-guided image editing neural network using a training dataset that can be generated quickly and automatically from unlabeled images which are publicly available or otherwise easily obtainable in massive volumes. From another point of view, the training system uses existing image data in a way that increases the value of the data for training a sketch-guided image editing neural network.

The described techniques introduce a technological improvement over existing training approaches for training a sketch-guided image editing neural network to achieve state-of-the-art performance on sketch-guided image editing tasks. Those existing training approaches usually require a lengthy process that involves labeling and annotation operations to generate a training dataset every time a new set of unlabeled images are received. In contrast, the described techniques can generate a training dataset much more quickly since neither labeling nor annotation is needed. Compared with existing training approaches, the training system can thus conserve computational resources (e.g., network bandwidth and storage) associated with human labeling and image editing.

The details of one or more embodiments of the subject matter described in this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 shows an example training system and an example inference system.
FIG. 2 is an example illustration of operations performed by a training data generation engine.
FIG. 3 is a flow diagram of an example process for automatically generating a training dataset based on an initial dataset.
FIG. 4 is a flow diagram of an example process for training a sketch-guided image editing neural network using a training dataset.

Like reference numbers and designations in the various drawings indicate like elements.

### DETAILED DESCRIPTION

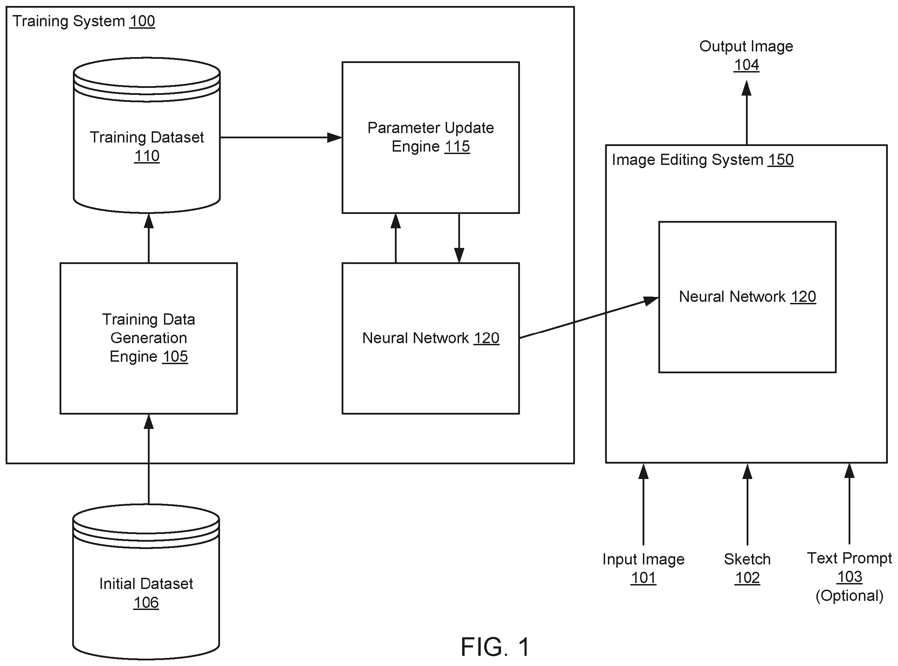

FIG. 1 shows an example training system 100 and an example image editing system 150. The training system 100 and the image editing system 150 are examples of a system implemented as computer programs on one or more computers in one or more locations, in which the systems, components, and techniques described below can be implemented.

The training system 100 trains a sketch-guided image editing neural network 120 (or "neural network 120" for short) for deployment at the image editing system 150 to perform a sketch-guided image editing task, i.e., to apply an edit to an input image 101 that is specified by a sketch image 102 (or "sketch 102" for short) and, optionally, a text prompt 103.

In operation, the image editing system 150 receives an input image 101 from a user. As used herein, an "image" refers to a digital image, such as a two-dimensional image or a three-dimensional image, or even consecutive frames of video. An image can have multiple pixels, where each pixel can have multiple values.

The image editing system 150 can obtain the input image 101 in any of a variety of ways. For example, the image editing system 150 can receive the input image 101 as an upload from the user over a data communication network, e.g., using an application programming interface (API) made available by the system. As another example, the image editing system 150 can receive an input from the user specifying which image that is stored locally at the system or a data store accessible by the system over the data communication network should be used as the input image 101.

In addition to the input image 101, the image editing system 150 receives a sketch 102 that specifies a target object that should appear in an output image 104. As used herein, a sketch refers to a graphic created by a user. In some cases, the graphic shows a quick drawing that captures the essential lines and shapes of a target object. Examples of objects include landmarks, landscape or location features, vehicles, tools, food, clothing, devices, animals, human, to name just a few.

The image editing system 150 can obtain the sketch 102 in any of a variety of ways. For example, the user can draw a sketch through an interface, e.g., a graphical user interface (GUI), a web interface, or another appropriate interface, presented on a display device of a computing device, e.g., when the display device is a touch-sensitive display (such as a touchpad, touch screen, or a touch-screen display), or alternatively through an input device that is paired with the display device, e.g., a keyboard and a mouse, a joystick, a virtual reality, augmented reality, or mixed reality input device, or another handheld input device. As another example, the user can select a desired sketch from a data store of sketches accessible over the data communication network or from locally stored sketches. As another example, the user can upload an image of a free-hand or hand-drawn sketch to the image editing system 150.

In some implementations, the user provides the sketch 102 together with the input image 101 to the image editing system 150-and the image editing system 150 receives the input image 101 and the sketch 102 as a single input from the user.

For example, the interface can be included in an image editing application, a photo album application, or another application that is installed and executes on the computing device. The interface can present a sketch canvas which is overlaid over the input image 101 displayed within the interface, e.g., the sketch canvas can cover a part or an entirety of an area of the interface within which the input image 101 is displayed.

Accordingly, the user can utilize the computing device to provide any free-hand or hand-drawn sketch, or another pre-stored shapes, sketch, or the like to add to the sketch canvas above the input image 101. After the user has completed the sketch, the sketch canvas might disappear, but the sketch 102 can remain over the input image 101, and the sketch 102 and the input image 101 can be provided together as an upload to the image editing system 150.

In some implementations, in addition to providing a sketch, the user can also provide a text prompt 103 either in the same input as the input image 101, or in a different input, e.g., in a touchscreen input, a voice input, or a keyboard input. The text prompt 103 can include text in some natural language that references the target object in any of a variety of ways.

In some cases, the text prompt 103 describes the target object. For example, the text prompt 103 can define the type of the target object, the appearance or visual characteristics of the target object, and so on.

In some cases, the text prompt 103 describes the edit to be applied to the input image 101. For example, the text prompt 103 can define which aspect of the input image 101 should be modified, e.g., the text prompt 103 can be "add to the <input image> a depiction of [target object] in the same style as the <input image>".

In some cases, the text prompt 103 describes the output image 104. For example, the text prompt 103 can be "create an image that includes a depiction of [target object] at the bottom right corner of the <input image>; the depiction is in the same style as the <input image>". As another example, the text prompt 103 can include a caption of the output image 104, e.g., "a vase with flowers on top".

Having received the input image 101, the sketch 102 and, optionally, the text prompt 103, the image editing system 150 applies an edit to the input image 101 that is specified by the sketch 102 and, when received, the text prompt 103 to generate an output image 104 by using the neural network 120 to perform the sketch-guided image editing task.

The output image 104 is an edited version of the input image 101. For example, the output image 104 can include a depiction of the target object that is specified in the sketch 102 (and that does not appear in the input image 101), in addition to the depiction of one or more objects that already appear in the input image 101.

Once generated, the output image 104 can be used in any of a variety of ways. For example, the image editing system 150 can provide the output image 104 for presentation to a user in an interface on a display device of a computing device, e.g., as a response to the user who provided the input image 101 and/or the sketch 102. For example, the interface can be included in an image editing application, a photo album application, or another application that is installed and executes on the computing device. As another example, the image editing system 150 can provide the output image 104 to another system for further processing. As another example, the image editing system 150 can store the output image 104 in a repository for later use.

The neural network 120 can be any appropriate conditional diffusion neural network, i.e., any diffusion neural network that can be used by the image editing system 150 to generate an output image conditioned on a (possibly multi-modal) conditioning input that includes an input image, a sketch, and, optionally, a text prompt by executing a reverse diffusion process across a plurality of updating iterations.

At each updating iteration in the reverse diffusion process, the neural network 120 can be configured to receive a diffusion input that includes a current (noisy) representation of an output image as of the updating iteration and a conditioning input and to process the diffusion input to generate a diffusion output for the updating iteration from which an updated representation of the output image can be derived. Generally, the diffusion input also includes a time index that defines a noise level for the current (noisy) representation of the output image.

If the updating iteration is the first updating iteration in the reverse diffusion process, the current representation of the output image is the initial representation of the output image. For example, the image editing system 150 can initialize the representation of the output image, i.e., can generate the initial representation of the output image, based on sampling each value in the representation from a corresponding noise distribution, e.g., a Gaussian distribution, or a different noise distribution.

For any subsequent updating iteration, the current representation of the output image is the updated representation of the output image that has been generated in the immediately preceding updating iteration.

In some implementations, the neural network 120 performs a reverse diffusion process in pixel space, so that the data items ("representations") operated on by the neural network are images that have values for each pixel that specify color values, e.g., RGB values or another color encoding scheme.

In some implementations, the neural network 120 performs a reverse diffusion process in latent space, e.g., in a latent space that is lower-dimensional than the pixel space. That is, the data items ("representations") operated on by the neural network 120 are latent images and the values for the pixels of the latent images are learned, latent values rather than color values.

In these implementations, the neural network 120 can include or be associated with an image encoder to encode images into the latent space and a decoder neural network that receives an input that includes a latent representation of an image and decodes the latent representation to reconstruct the image. For example, the encoder and decoder can have been trained jointly on an image reconstruction objective, e.g., a VAE objective, a VQ-GAN objective, or a VQ-VAE objective.

In some implementations, at each updating iteration in the reverse diffusion process, the neural network 120 directly generates the updated representation of the output image, e.g., the diffusion output for the updating iteration includes the updated representation of the output image.

In some implementations, at each updating iteration in the reverse diffusion process, the neural network 120 indirectly generates the updated representation of the output image, e.g., the diffusion output for the updating iteration includes a noise term computed by the neural network 120 for the updating iteration, and the updated representation of the output image can then be generated by removing at least some of the noise from the current representation of the output image in accordance with the noise term.

For example, when the neural network 120 performs a reverse diffusion process in pixel space, the noise term can be an estimate of the noise, as computed by the neural network 120, that has been added to the output image to arrive at the current (noisy) representation of the output image. As another example, when the neural network 120 performs a reverse diffusion process in latent space, the noise term can be an estimate of the noise, as computed by the neural network 120, that has been added to a latent representation of the output image to arrive at the current representation of the output image.

The neural network 120 can generally have any suitable conditional diffusion neural network architecture.

Examples of suitable diffusion neural network architectures include those described in Hu, Hexiang, et al. Instruct-imagen: Image generation with multi-modal instruction. Proceedings of the IEEE/CVF conference on computer vision and pattern recognition. 2024; Baldridge, Jason, et al. Imagen 3. arXiv preprint arXiv:2408.07009 (2024); Zhao, Yang, et al. Mobilediffusion: Instant text-to-image generation on mobile devices. European Conference on Computer Vision. Cham: Springer Nature Switzerland, 2024; and Chen, Wenhu, et al. Subject-driven text-to-image generation via apprenticeship learning. Advances in Neural Information Processing Systems 36 (2023): 30286-30305.

For example, the neural network 120 can have a convolutional neural network architecture, e.g., a U-Net architecture, that has multiple convolutional layer blocks. In some of these cases, the neural network 120 can include one or more attention layer blocks interspersed among the convolutional layer blocks, where some or all of the attention blocks can be conditioned on one or more representations of the conditioning input.

As another example, the neural network 120 can have a Transformer neural network architecture that processes the diffusion input through a set of self-attention layers to generate the diffusion output. In these examples, the neural network 120 can also include one or more attention blocks that are conditioned on one or more representations of the conditioning input.

Such representations of the conditioning input can be generated in any of a variety of ways. For example, the neural network 120 can include or be associated with an image encoder neural network that generates an encoded representation of the input image 101, and that generates an encoded representation of the sketch 102. Optionally, the neural network 120 can include or be associated with a text encoder neural network that generates an encoded representation of the text prompt 103.

As a particular example, the neural network 120 can include an image encoder, a text encoder, a diffusion backbone, and an image decoder. Optionally the neural network 120 can also include a time index encoder.

The image encoder is configured to receive an input and to process the input to generate as output an encoded representation. The input can be a current representation of an output image, and the output can thus be an encoded representation of the output image. Alternatively, the input can be an input image, and the output can thus be an encoded representation of the input image. Alternatively, the input can be a sketch, and the output can thus be an encoded representation of the sketch.

The text encoder is configured to receive an input that includes a text prompt and to process the input to generate an encoded representation of the text prompt.

When included, the time index encoder is configured to receive an input that includes the time index and to process the input to generate an encoded representation of the time index.

The diffusion backbone is configured to receive an input that includes the encoded representation of the output image, the encoded representation of the input image, the encoded representation of the sketch, the encoded representation of the text prompt, and either the time index (when the time index encoder is not included) or the encoded representation of the time index (when the time index encoder is included), and to process the input to generate a backbone output.

The image decoder is configured to receive as input the backbone output and to process the input to generate the diffusion output.

Generally, the image encoder, text encoder, diffusion backbone, and image decoder, can each have any suitable neural network architecture, i.e., can have any appropriate number of neural network layers (e.g., 1 layer, 5 layers, or 10 layers) of any appropriate type (e.g., fully-connected layers, attention layers, convolutional layers, etc.) connected in any appropriate configuration (e.g., as a linear sequence of layers, or as a directed graph of layers).

The diffusion backbone of the neural network 120 can be conditioned on the encoded representation of the sketch and the encoded representation of the text prompt in any of a variety of ways.

For example, the diffusion backbone can include one or more cross-attention layers that cross attend into the encoded representation of the sketch and the encoded representation of the text prompt.

As another example, the diffusion backbone can include one or more other types of neural network layers that are conditioned on the encoded representations. Examples of such layers include Feature-wise Linear Modulation (FiLM) layers, layers with conditional gated activation functions, and so on.

Prior to being deployed in the image editing system 150, the neural network 120 has been trained by the training system 100 to determine the trained values of the parameters of the neural network 120 that allow the neural network 120 to generate output images with an acceptable quality, e.g., with an acceptable fidelity, an acceptable relevance to the conditioning input, an acceptable spatial resolution, an acceptable noise level, and so on.

The training system 100 generates a training dataset 110, and then trains the neural network 120 to determine the trained values of the parameters of the neural network 120 based on optimizing an objective function using the training dataset 110.

The training dataset 110 includes a plurality of training tuples. Each training tuple includes an initial image and a modified image. In some implementations, each training tuple also includes a segmentation map. Alternatively, in some other implementations, each training tuple also includes a sketch.

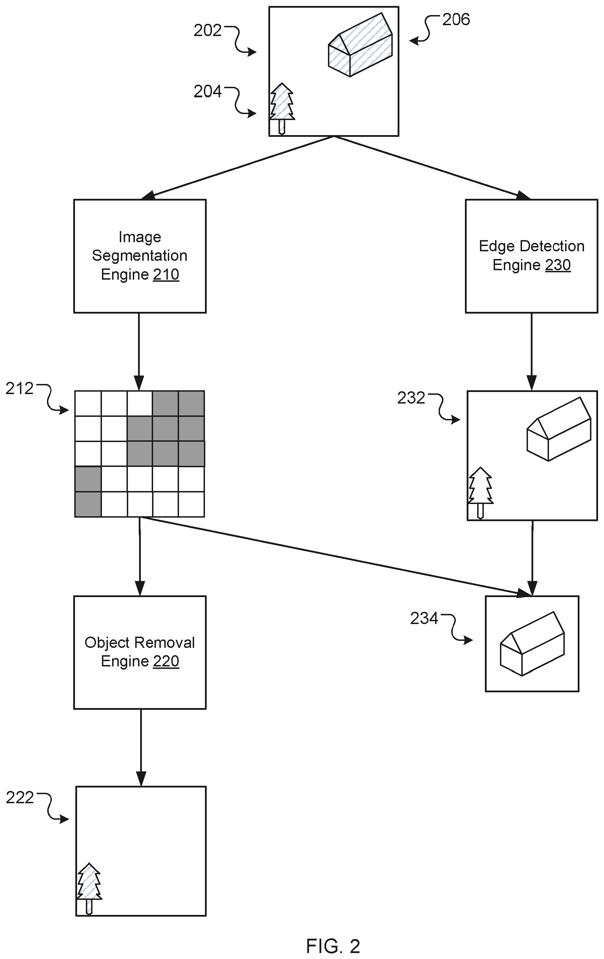

As will be described in more detail below with reference to FIG. 2, a training data generation engine 105 of the training system 100 generates the training dataset 110 in an automatic manner, with no or minimal human involvement, based on an initial dataset 106 that includes a plurality of initial images.

The initial dataset 106 can be any dataset or any combination of multiple datasets that is made available to the training system 100, and the initial images can include any images which need not be labeled or annotated, i.e., an initial image need not be associated with a corresponding text caption or another text sequence that is descriptive of the content of the initial image.

The training system 100 can obtain or access the plurality of initial images included in the initial dataset 106 in any of a variety of ways. For example, the training system 100 can receive the plurality of initial images as an upload from the user over a data communication network, e.g., using an application programming interface (API) made available by the system. As another example, the training system 100 can receive an input from the user specifying which images that are publicly available on the Internet should be used as the plurality of initial images.

Once the training dataset 110 has been automatically generated, a parameter update engine 115 of the training system 100 trains the neural network 120 by performing iterations of a neural network training technique to optimize an objective function and to update the values of the parameters of the neural network 120.

The objective function can be any objective function that measures a quality of a diffusion output generated by the neural network 120 for each training tuple.

In some implementations, the objective function can be an objective function that measures, for a training tuple obtained from the training dataset 110, a difference between (i) a training output image generated by the neural network 120 based on processing a training diffusion input that includes a modified image included in the training tuple and (ii) an initial image included in the training tuple.

In some implementations where each diffusion output includes a noise term computed by the neural network, the objective function can be an objective function that measures, for a training tuple obtained from the training dataset 110, a difference between (i) a training diffusion output generated by the neural network 120 based on processing a training diffusion input that includes a noisy representation of an initial image and (ii) a ground truth diffusion output generated by the neural network 120 based on the noise that was added to the initial image to generate the noisy representation.

For example, the objective function can be a mean average error (MAE) loss function. As another example, the objective function can be a mean squared error (MSE) loss function. As another example, the objective function can be a root mean squared error (RMSE) loss function. As yet another example, the objective function can be a time re-weighted square error loss function, as described in Jonathan Ho, Ajay Jain, and Pieter Abbeel. Denoising diffusion probabilistic models. NeurIPS, 2020.

While this specification describes training a neural network to generate output images conditioned on sketches, the techniques described in this specification can be broadly applied to training any conditional diffusion neural network to generate output images conditioned on input images that may or may not be sketch images.

Moreover, while this specification describes the neural network 120 being configured as a diffusion neural network, the neural network 120 can generally be configured as any appropriate conditional generative neural network that can generate an output image conditioned on a (possibly multi-modal) conditioning input that includes an input image, a sketch, and, optionally, a text prompt.

For example, the neural network 120 can be configured as an auto-regressive generative neural network, a non-auto-regressive masked token generation neural network, a normalizing flows model, an energy-based model, the generator of a generative adversarial neural network, and so on.

FIG. 2 is an example illustration 200 of operations performed by the training data generation engine 105 of FIG. 1.

The training data generation engine 105 has access to an image segmentation engine 210, an object removal engine 220, and, in some implementations, an edge detection engine 230.

For each initial image 202 obtained from the initial dataset 106, the training data generation engine 105 uses the image segmentation engine 210 to generate a segmentation map 212 for the initial image 202. In some implementations, the training data generation engine 105 uses the edge detection engine 230 to generate an edge map 232 for the initial image 202.

A "segmentation map" as described herein refers to a digital representation (e.g., a file, matrix, an image, or a bitmap) of those areas of an initial image that have been classified as objects, and those areas that have been classified as background. In some implementations, the segmentation map can have the same pixel resolution as the initial image. Each pixel of the segmentation map can include a value, e.g., a binary mask, indicative of the corresponding pixel in the initial image being either a foreground pixel (that is part of a depiction of an object) or a background pixel (that is not part of a depiction of any object).

For example, in FIG. 2, the segmentation map 212 includes values (illustrated in darker color) that identify areas of the initial image 202 as being part of depictions of objects (tree 204 and building 206), and values (illustrated in lighter color) that identify areas of the initial image 202 as being part of depiction of a background.

In some implementations, the image segmentation engine can implement an image segmentation neural network to perform the image segmentation on the initial images. The image segmentation neural network can generally have any suitable neural network architecture.

For example, the image segmentation neural network can be a convolutional neural network, e.g., that has a U-net architecture (as described in Ronneberger, Olaf, et al. U-net: Convolutional networks for biomedical image segmentation. Medical image computing and computer-assisted intervention-MICCAI 2015: 18th international conference, Munich, Germany, October 5-9, 2015, proceedings, part III 18. Springer international publishing, 2015), or a K-net architecture (as described in Zhang, Wenwei, et al. K-net: Towards unified image segmentation. Advances in Neural Information Processing Systems 34 (2021): 10326-10338).

As another example, the image segmentation neural network can be a Transformer neural network, e.g., that has a Segment Anything Model (SAM) architecture that includes a text encoder that processes a text prompt, an image encoder that processes an input image, and a mask decoder that generates a segmentation map (as described in Kirillov, Alexander, et al. Segment anything. Proceedings of the IEEE/CVF international conference on computer vision. 2023), or a Mask2Former architecture that includes a sequence of masked attention blocks (as described in Cheng, Bowen, et al. Masked-attention mask transformer for universal image segmentation. Proceedings of the IEEE/CVF conference on computer vision and pattern recognition. 2022).

An "edge map" as described herein refers to a digital representation of detected edges of an initial image. The edge map can include values that identify the locations of the edges of the initial image and, optionally, values indicative of the strength or reliability of the edges. In some implementations, the edge map can have the same pixel resolution of the initial image.

For example, in FIG. 2, the edge map 232 includes values that identify the locations of the edges of the initial image 202. Collectively, the identified edges define the contour, or boundary, of each of the objects (tree 204 and building 206) depicted in the initial image 202.

In some implementations, the edge detection engine 230 can implement an edge detection algorithm to detect edges in the initial image. Edge detection generally involves identifying and locating discontinuities between pixels in an image. The discontinuities may represent material changes in pixel intensity or pixel color which defines boundaries of objects in an image. There are many edge detection algorithms that can be used.

For example, the edge detection engine 230 can use a gradient technique to detect edges in an image by filtering the image to return different pixel values in first regions of greater discontinuities or gradients than in second regions with lesser discontinuities or gradients. In this example, the gradient technique can detect the edges by estimating the maximum and minimum of the first derivative of the pixel intensity of the image.

As another example, the edge detection engine 230 can use a Laplacian technique to detect edges in an image by searching for zero crossings in the second derivative of the pixel intensity values of the image.

Further examples of suitable edge detection algorithms include a Roberts cross edge detection algorithm, a Sobel edge detection algorithm, a Canny edge detection algorithm, and a holistically-nested edge detection algorithm (as described in Xie, Saining, et al. Holistically-nested edge detection. Proceedings of the IEEE international conference on computer vision. 2015), among others.

In some other implementations, the edge detection engine 230 can implement an edge detection neural network. The edge detection neural network can generally have any suitable neural network architecture, i.e., can have any appropriate number of neural network layers (e.g., 1 layer, 5 layers, or 10 layers) of any appropriate type (e.g., fully-connected layers, attention layers, convolutional layers, etc.) connected in any appropriate configuration (e.g., as a linear sequence of layers, or as a directed graph of layers).

For each initial image 202, the training data generation engine 105 uses the object removal engine 220 to process an input that includes the initial image 202 and the segmentation map 212 for the initial image 202 to generate a modified image 222 that excludes the depiction of one of the objects depicted in the initial image 202.

That is, one of the objects depicted in the initial image 202 is excluded from, i.e., not depicted in, the modified image 222, while other visual characteristics of the modified image 222 remain substantively similar to the initial image 202. Such visual characteristics may include, for example, same color, same general locations for any remaining objects, or same brightness or shading.

For example, in FIG. 2, the modified image 222 excludes the depiction of one of the objects, i.e., excludes the depiction of the building 206, that was previously included in the initial image 202, while maintaining the depiction of the other one of the objects, i.e., maintaining the depiction of the tree 204.

In some implementations, the object removal engine 220 can implement an object removal neural network to perform the object removal on the initial images. The object removal neural network can generally have any suitable neural network architecture.

For example, the object removal neural network can have a Transformer-based encoder-decoder neural network architecture where an encoder, a decoder, or both of the model includes one or more attention layers (e.g., as described in Keunsoo Ko, et al. Continuously masked transformer for image inpainting. In Proceedings of the IEEE/CVF International Conference on Computer Vision, pages 13169-13178, 2023, and Pourya Shamsolmoali, et al. Transinpaint: Transformer-based image inpainting with context adaptation. In Proceedings of the IEEE/CVF International Conference on Computer Vision, pages 849-858, 2023).

As another example, the object removal neural network can have a convolution-based encoder-decoder neural network architecture where an encoder, a decoder, or both of the model includes one or more convolution layers (e.g., as described in Li, Ruibin, et al. RORem: Training a Robust Object Remover with Human-in-the-Loop. arXiv preprint arXiv:2501.00740 (2025).

The object the depiction of which being removed from the initial image 202 can be any one of the one or more objects depicted in the initial image 202. When only one object is depicted in the initial image 202, the depiction of the object may be removed. When there are multiple objects depicted in the initial image 202, the depiction of any one of these objects, e.g., a randomly selected object or an object selected in accordance with a setting of the object removal engine 220, may be removed.

For example, in implementations where the input of the object removal engine 220 is a multi-modal input that also includes a text prompt, e.g., where the object removal neural network includes a text encoder, the text prompt can specify an object the depiction of which should be removed from the initial image, e.g., the text prompt can be "remove the object having the largest size" or "remove the object located in the top right corner of the image".

In some implementations where the edge detection engine 230 is not used when generating the training dataset 110, for each initial image 202, the training data generation engine 105 stores the initial image 202 in association with the modified image 222 and segmentation map 212 as a training tuple in the training dataset 110 that includes a plurality of training tuples being automatically generated by the training data generation engine 105.

In some other implementations where the edge detection engine 230 is used when generating the training dataset 110, for each initial image 202, the training data generation engine 105 stores the initial image 202 in association with the modified image 222 and a sketch 234 as a training tuple in the training dataset 110. The sketch 234 can be derived from the segmentation map 212 and the edge map 232 that have been generated for the initial image 202.

To generate the sketch 234, the training data generation engine 105 can identify, based on the segmentation map 212, a portion of the edge map 232 that corresponds to the object the depiction of which has been removed by using the object removal engine 220 in the modified image 222. Then, the training data generation engine 105 can crop the edge map 232 to generate a cropped edge map that represents a reduced portion of the edge map 232.

The cropped edge map includes values that identify the locations of the edges in a reduced portion of the initial image 202. For example, in FIG. 2, the cropped edge map can include values that identify the locations of the edges in a reduced portion of the initial image 202 where the one of the objects (building 206) is depicted.

In some implementations, because the identified edges in the cropped edge map define the contour of the one object (building 206), the training data generation engine 105 directly uses the cropped edge map as the sketch 234 without further processing.

In some other implementations, one or more image processing operations can be applied by the training data generation engine 105 on the cropped edge map to convert the cropped edge map to the sketch 234. Examples of these image processing operations include cropping, binning, scaling, brightness adjustment, contrast adjustment, and color inversion, among others.

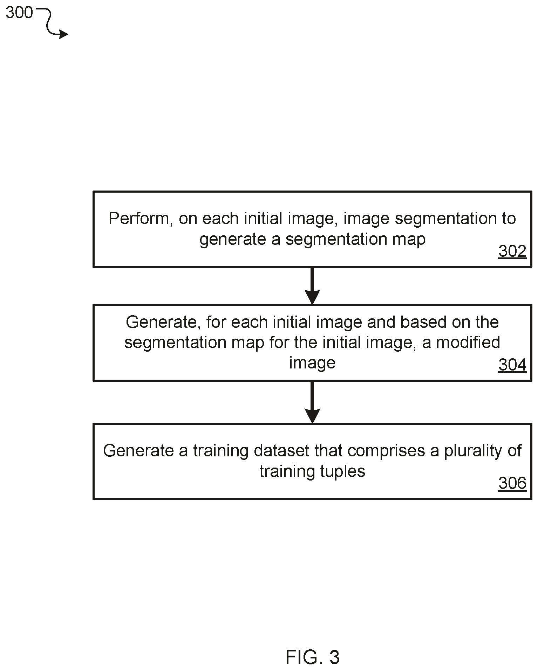

FIG. 3 is a flow diagram of an example process 300 for automatically generating a training dataset based on an initial dataset. For convenience, the process 300 will be described as being performed by one or more systems of one or more computers located in one or more locations. For example, a training system, e.g., the training system 100 of FIG. 1, appropriately programmed in accordance with this specification, can perform the process 300.

The initial dataset includes a plurality of initial images. The initial dataset can be any dataset or any combination of multiple datasets that is made available to the system, and the initial images can include any images which need not be labeled or annotated.

For each of the plurality of initial images, the system performs image segmentation on the initial image to generate a segmentation map for the initial image (step 302). The segmentation map identifies an area in the initial image that includes a depiction of an object. The object can be any one of the one or more objects depicted in the initial image.

In some implementations, the system uses an image segmentation neural network to perform the image segmentation on the initial images. For example, the image segmentation neural network can be configured to receive an input that includes the initial image and, optionally, a text prompt and to process the input to generate, as output, the segmentation map for the initial image.

For each of the plurality of initial images, the system generates, based on the segmentation map for the initial image, a modified image that excludes the depiction of the object (step 304). That is, the object depicted in the initial image is excluded from, i.e., not depicted in, the modified image, while other visual characteristics of the modified image remain substantively similar to the initial image.

In some implementations, the system uses an object removal neural network to perform the object removal on the initial images. For example, the object removal neural network can be configured to receive an input that includes the initial image, the segmentation map for the initial image and, optionally, a text prompt and to process the input to generate, as output, the modified image.

The system generates a training dataset that includes a plurality of training tuples (step 306). Each training tuple includes an initial image and a modified image that has been generated for the initial image.

In some implementations, each training tuple also includes the segmentation map that has been generated for the initial image that is included in the training tuple. Alternatively, in some other implementations, each training tuple also includes a sketch. The sketch can be derived from the segmentation map and an edge map that have been generated for the initial image, as described above with reference to FIG. 2.

Such a training dataset that is automatically generated by performing the process 300 can then be used by the system to train a sketch-guided image editing neural network to perform a sketch-guided image editing task, i.e., to apply an edit to an input image that is specified by a sketch and, optionally, a text prompt.

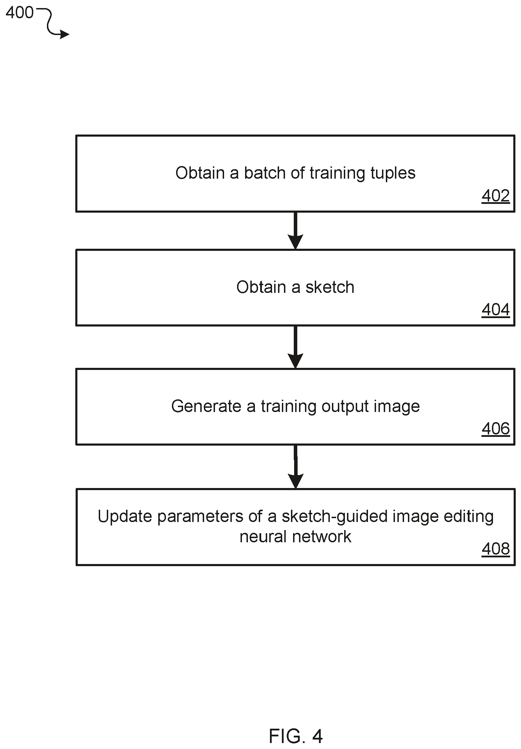

FIG. 4 is a flow diagram of an example process 400 for training a sketch-guided image editing neural network (or "neural network" for short) using the training dataset. For convenience, the process 400 will be described as being performed by one or more systems of one or more computers located in one or more locations. For example, a training system, e.g., the training system 100 of FIG. 1, appropriately programmed in accordance with this specification, can perform the process 400.

The system can repeatedly perform iterations of the process 400 on different batches of training tuples to update the values of the parameters of the neural network. The system can continue performing iterations of the process 400 until termination criteria for the training of the neural network have been satisfied, e.g., until the parameters have converged, until a threshold amount of wall clock time has elapsed, or until a threshold number of iterations of the process 400 have been performed.

The system obtains a batch of one or more training tuples from the training dataset (step 402). The system will generally obtain different training tuples at different iterations, e.g., by sampling a fixed number of training tuples from a larger number of training tuples from the training dataset at each iteration.

The system obtains, for each training tuple in the batch, a sketch of an object depicted in the initial image included in the training tuple (step 404). The object can be any one of the one or more objects depicted in the initial image.

In some implementations, the sketch is already included in the training tuple. Alternatively, in some other implementations, the sketch is not included. In those implementations, the system can generate the sketch of the object on-the-fly based on the initial image and the segmentation map included in the training tuple.

For example, as similarly described above with reference to FIG. 2, the system can use an edge detection engine to generate an edge map for the initial image, generate a cropped edge map that includes values that identify the locations of the edges in a reduced portion of the initial image where the object is depicted, and then generate the sketch based on the cropped edge map.

In some implementations, the system selects different ones of the edge detection algorithms to generate the sketches when training the neural network. For example, the system can randomly select an edge detection algorithm at each iteration.

While the inclusion of the sketches in the training dataset preserves computational resources consumed during the training, given that these sketches need not be generated on-the-fly, generating these sketches on-the-fly during the training allows the neural network to process sketches generated based on edge maps generated using a variety of different edge detection algorithms - e.g., to process sketches generated based on edge maps generated using both a Canny edge detection algorithm and a holistically-nested edge detection algorithm, such that once trained, the neural network is more robust with respect to various free-hand or hand-drawn sketches.

For each training tuple in the batch, the system generates a training output image based on processing at least the sketch and the modified image using the neural network (step 406). The modified image is included in the training tuple, while the sketch is either included in the training tuple or generated by the system on-the-fly.

The neural network can be any appropriate conditional diffusion neural network that is configured to receive a diffusion input that includes a noisy representation of the initial image, the modified image, and the sketch, and to process the diffusion input to generate a diffusion output that specifies, either directly or indirectly, the training output image.

The noisy representation of the initial image can be generated by the system based on adding noise to the initial image that is included in the training tuple. The diffusion input can also include a time index that defines a noise level for the noisy representation of the initial image.

Optionally, the diffusion input can also include a text prompt. In some implementations, such a text prompt can similarly be generated by the system on-the-fly. For example, this can be done by using an image captioning neural network to process the initial image to generate a caption for initial image that describes the content of the initial image, e.g., "a vase with flowers on top", and possibly appending the caption to a predetermined text sequence, e.g., "create an image that shows".

The system updates the values of the parameters of the neural network based on optimizing an objective function (step 408). The objective function can be any objective function that measures, for each training tuple in the batch, a difference between a training output image and an initial image included in the training tuple. The objective function can be any objective function that measures, for each training tuple in the batch, a quality of a diffusion output generated by the neural network for each training tuple.

The system can do this by computing, for each training tuple in the batch, respective gradients of the objective function with respect to the parameters of the neural network by backpropagation through the appropriate parameters of the neural network. The system can then determine the updates by applying an update rule, e.g., an Adam update rule, an Rmsprop update rule, or a stochastic gradient descent (SGD) update rule, to the respective gradients.

In some implementations, the values of all of the parameters of the neural network are updated during the training, whereas, in other implementations, only the values of some of the parameters of the neural network are updated.

For example, when then neural network has already been trained on a different training dataset, based on optimizing a different objective function, or both, the system can perform iterations of the process 400 to fine-tune, i.e., further train, the neural network by updating the values of the parameters of a subset of the layers of the neural network.

For example, the parameters that are being updated can include a set of adaptation parameters, e.g., a set of low rank adaptation (LoRA) parameters, of each of one or more layers of the layers of the neural network.

In this specification, the term "configured" is used in relation to computing systems and environments, as well as computer program components. A computing system or environment is considered "configured" to perform specific operations or actions when it possesses the necessary software, firmware, hardware, or a combination thereof, enabling it to carry out those operations or actions during operation. For instance, configuring a system might involve installing a software library with specific algorithms, updating firmware with new instructions for handling data, or adding a hardware component for enhanced processing capabilities. Similarly, one or more computer programs are "configured" to perform particular operations or actions when they contain instructions that, upon execution by a computing device or hardware, cause the device to perform those intended operations or actions.

The embodiments and functional operations described in this specification can be implemented in various forms, including digital electronic circuitry, software, firmware, computer hardware (encompassing the disclosed structures and their structural equivalents), or any combination thereof. The subject matter can be realized as one or more computer programs, essentially modules of computer program instructions encoded on a tangible non-transitory storage medium for execution by or to control the operation of a computing device or hardware. The storage medium can be a storage device such as a hard drive or solid-state drive (SSD), a storage medium, a random or serial access memory device, or a combination of these. Additionally or alternatively, the program instructions can be encoded on a transmitted signal, such as a machine-generated electrical, optical, or electromagnetic signal, designed to carry information for transmission to a receiving device or system for execution by a computing device or hardware. Furthermore, implementations may leverage emerging technologies like quantum computing or neuromorphic computing for specific applications, and may be deployed in distributed or cloud-based environments where components reside on different machines or within a cloud infrastructure.

The term "computing device or hardware" refers to the physical components involved in data processing and encompasses all types of devices and machines used for this purpose. Examples include processors or processing units, computers, multiple processors or computers working together, graphics processing units (GPUs), tensor processing units (TPUs), and specialized processing hardware such as field-programmable gate arrays (FPGAs) or application-specific integrated circuits (ASICs). In addition to hardware, a computing device or hardware may also include code that creates an execution environment for computer programs. This code can take the form of processor firmware, a protocol stack, a database management system, an operating system, or a combination of these elements. Embodiments may particularly benefit from utilizing the parallel processing capabilities of GPUs, in a General-Purpose computing on Graphics Processing Units (GPGPU) context, where code specifically designed for GPU execution, often called kernels or shaders, is employed. Similarly, TPUs excel at running optimized tensor operations crucial for many machine learning algorithms. By leveraging these accelerators and their specialized programming models, the system can achieve significant speedups and efficiency gains for tasks involving artificial intelligence and machine learning, particularly in areas such as computer vision, natural language processing, and robotics.

A computer program, also referred to as software, an application, a module, a script, code, or simply a program, can be written in any programming language, including compiled or interpreted languages, and declarative or procedural languages. It can be deployed in various forms, such as a standalone program, a module, a component, a subroutine, or any other unit suitable for use within a computing environment. A program may or may not correspond to a single file in a file system and can be stored in various ways. This includes being embedded within a file containing other programs or data (e.g., scripts within a markup language document), residing in a dedicated file, or distributed across multiple coordinated files (e.g., files storing modules, subprograms, or code segments). A computer program can be executed on a single computer or across multiple computers, whether located at a single site or distributed across multiple sites and interconnected through a data communication network. The specific implementation of the computer programs may involve a combination of traditional programming languages and specialized languages or libraries designed for GPGPU programming or TPU utilization, depending on the chosen hardware platform and desired performance characteristics.

In this specification, the term "engine" broadly refers to a software-based system, subsystem, or process designed to perform one or more specific functions. An engine is typically implemented as one or more software modules or components installed on one or more computers, which can be located at a single site or distributed across multiple locations. In some instances, one or more dedicated computers may be used for a particular engine, while in other cases, multiple engines may operate concurrently on the same one or more computers. Examples of engine functions within the context of AI and machine learning could include data pre-processing and cleaning, feature engineering and extraction, model training and optimization, inference and prediction generation, and post-processing of results. The specific design and implementation of engines will depend on the overall architecture and the distribution of computational tasks across various hardware components, including CPUs, GPUs, TPUs, and other specialized processors.

The processes and logic flows described in this specification can be executed by one or more programmable computers running one or more computer programs to perform functions by operating on input data and generating output. Additionally, graphics processing units (GPUs) and tensor processing units (TPUs) can be utilized to enable concurrent execution of aspects of these processes and logic flows, significantly accelerating performance. This approach offers significant advantages for computationally intensive tasks often found in AI and machine learning applications, such as matrix multiplications, convolutions, and other operations that exhibit a high degree of parallelism. By leveraging the parallel processing capabilities of GPUs and TPUs, significant speedups and efficiency gains compared to relying solely on CPUs can be achieved. Alternatively or in combination with programmable computers and specialized processors, these processes and logic flows can also be implemented using specialized processing hardware, such as field-programmable gate arrays (FPGAs) or application-specific integrated circuits (ASICs), for even greater performance or energy efficiency in specific use cases.

Computers capable of executing a computer program can be based on general-purpose microprocessors, special-purpose microprocessors, or a combination of both. They can also utilize any other type of central processing unit (CPU). Additionally, graphics processing units (GPUs), tensor processing units (TPUs), and other machine learning accelerators can be employed to enhance performance, particularly for tasks involving artificial intelligence and machine learning. These accelerators often work in conjunction with CPUs, handling specialized computations while the CPU manages overall system operations and other tasks. Typically, a CPU receives instructions and data from read-only memory (ROM), random access memory (RAM), or both. The elements of a computer include a CPU for executing instructions and one or more memory devices for storing instructions and data. The specific configuration of processing units and memory will depend on factors like the complexity of the AI model, the volume of data being processed, and the desired performance and latency requirements. Embodiments can be implemented on a wide range of computing platforms, from small embedded devices with limited resources to large-scale data center systems with high-performance computing capabilities. The system may include storage devices like hard drives, SSDs, or flash memory for persistent data storage.

Computer-readable media suitable for storing computer program instructions and data encompass all forms of non-volatile memory, media, and memory devices. Examples include semiconductor memory devices such as read-only memory (ROM), solid-state drives (SSDs), and flash memory devices; hard disk drives (HDDs); optical media; and optical discs such as CDs, DVDs, and Blu-ray discs. The specific type of computer-readable media used will depend on factors such as the size of the data, access speed requirements, cost considerations, and the desired level of portability or permanence.

To facilitate user interaction, embodiments of the subject matter described in this specification can be implemented on a computing device equipped with a display device, such as a liquid crystal display (LCD) or an organic light-emitting diode (OLED) display, for presenting information to the user. Input can be provided by the user through various means, including a keyboard), touchscreens, voice commands, gesture recognition, or other input modalities depending on the specific device and application. Additional input methods can include acoustic, speech, or tactile input, while feedback to the user can take the form of visual, auditory, or tactile feedback. Furthermore, computers can interact with users by exchanging documents with a user's device or application. This can involve sending web content or data in response to requests or sending and receiving text messages or other forms of messages through mobile devices or messaging platforms. The selection of input and output modalities will depend on the specific application and the desired form of user interaction.

Machine learning models can be implemented and deployed using machine learning frameworks, such as TensorFlow or JAX. These frameworks offer comprehensive tools and libraries that facilitate the development, training, and deployment of machine learning models.

Embodiments of the subject matter described in this specification can be implemented within a computing system comprising one or more components, depending on the specific application and requirements. These may include a back-end component, such as a back-end server or cloud-based infrastructure; an optional middleware component, such as a middleware server or application programming interface (API), to facilitate communication and data exchange; and a front-end component, such as a client device with a user interface, a web browser, or an app, through which a user can interact with the implemented subject matter. For instance, the described functionality could be implemented solely on a client device (e.g., for on-device machine learning) or deployed as a combination of front-end and back-end components for more complex applications. These components, when present, can be interconnected using any form or medium of digital data communication, such as a communication network like a local area network (LAN) or a wide area network (WAN) including the Internet. The specific system architecture and choice of components will depend on factors such as the scale of the application, the need for real-time processing, data security requirements, and the desired user experience.

The computing system can include clients and servers that may be geographically separated and interact through a communication network. The specific type of network, such as a local area network (LAN), a wide area network (WAN), or the Internet, will depend on the reach and scale of the application. The client-server relationship is established through computer programs running on the respective computers and designed to communicate with each other using appropriate protocols. These protocols may include HTTP, TCP/IP, or other specialized protocols depending on the nature of the data being exchanged and the security requirements of the system. In certain embodiments, a server transmits data or instructions to a user's device, such as a computer, smartphone, or tablet, acting as a client. The client device can then process the received information, display results to the user, and potentially send data or feedback back to the server for further processing or storage. This allows for dynamic interactions between the user and the system, enabling a wide range of applications and functionalities.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

## Claims

1. A method performed by one or more computers, the method comprising:
performing, on each of a plurality of initial images, image segmentation to generate a segmentation map for the initial image that identifies an area in the initial image that includes a depiction of an object;
generating, for each of the plurality of initial images and based on the segmentation map for the initial image, a modified image that excludes the depiction of the object;
generating a training dataset that comprises a plurality of training tuples, wherein each training tuple comprises an initial image and a modified image; and
training a sketch-guided image editing neural network using the training dataset, wherein the training comprises:
obtaining a batch of one or more training tuples from the training dataset;
obtaining, for each training tuple in the batch, a sketch of an object depicted in the initial image included in the training tuple;
generating, for each training tuple in the batch, a training output image based on processing the sketch and the modified image using the sketch-guided image editing neural network; and
updating parameters of the sketch-guided image editing neural network based on optimizing an objective function that measures, for each training tuple in the batch, a difference between the training output image and the initial image included in the training tuple.

2. The method of claim 1, wherein performing the image segmentation comprises, for each of the plurality of initial images:
processing the initial image using an image segmentation neural network to generate the segmentation map.

3. The method of any one of claims 1-2, wherein the generating the modified image that excludes the depiction of the object comprises, for each of the plurality of initial images:
processing the initial image and the segmentation map for the initial image using an object removal neural network to generate the modified image.

4. The method of any one of claims 1-3, wherein generating the sketch of the object comprises, for each training tuple in the batch:
processing the initial image included in the training tuple using an edge detector to generate an edge map for the initial image; and
generating the sketch of the object based on the edge map for the initial image and the segmentation map included in the training tuple.

5. The method of claim 4, wherein the edge detector implements a Canny edge detection algorithm; or
wherein the edge detector implements a holistically-nested edge detection algorithm.

6. The method of any one of claims 1-5, wherein the training tuple further comprises a text prompt that describes the object.

7. The method of any one of claims 1-6, wherein the sketch-guided image editing neural network is a diffusion neural network that is configured to generate an output image conditioned on a conditioning input that comprises an input image and a sketch by performing a reverse diffusion process that includes a plurality of updating iterations.

8. The method of claim 7, wherein the diffusion neural network comprises one or more layers that are conditioned on the conditioning input at each of one or more of the plurality of updating iterations included in the reverse diffusion process.

9. A method performed by one or more computers for sketch-guided image editing, the method comprising:
receiving an input image and a sketch image specifying a target object; and
processing, using a sketch-guided image editing neural network, the input image and the sketch image to generate an output image, wherein the output image is an edited version of the input image that includes a depiction of the target object corresponding to the sketch image,
wherein the sketch-guided image editing neural network has been configured through training on an automatically generated dataset derived from a plurality of initial images to map from a conditioning input that comprises (i) a modified image, the modified image being a modified version of an initial image from which an object has been removed, and (ii) a sketch of the removed object, to a training output image that corresponds to the initial image with the object present.

10. The method of claim 9, further comprising receiving a text prompt, and wherein the processing further uses the text prompt to generate the output image.

11. The method of any one of claims 9-10, wherein the sketches in the automatically generated dataset used for training the neural network were derived by:
processing the initial images using an edge detector to generate edge maps; and
generating the sketches based on the edge maps and corresponding segmentation maps identifying the removed objects.

12. The method of any one of claims 9-11, wherein the sketch-guided image editing neural network is a diffusion neural network configured to perform the processing by executing a reverse diffusion process conditioned on the input image and the sketch image.

13. A system, comprising:
one or more processors; and
one or more storage devices storing instructions that, when executed by the one or more processors, cause the one or more processors to perform the method of any of claims 1 to 12.

14. A computer-readable medium comprising instructions stored thereon that, when executed by one or more computers, cause the one or more computers to perform the method of any of claims 1 to 12.

15. A computer program product comprising instructions that, when executed by one or more processors, cause the one or more processors to perform the method of any of claims 1 to 12.
